# EUROPÄISCHE PATENTSCHRIFT

(11) **EP 1 164 281 B1**
(45) Veröffentlichungstag und Bekanntmachung des Hinweises auf die Patenterteilung: **24.09.2008**
(21) Anmeldenummer: 01107768.2
(22) Anmeldetag: 04.04.2001
(51) Int. Cl.: F02M 37/10

(54) **Kraftstoff-Förder- und Lüftungssystem**
Device for pumping fuel and ventilating the fuel tank
Dispositif pour pomper du carburant et pour ventiler le réservoir de carburant

(30) Priorität: 16.06.2000 DE 10028985
(43) Veröffentlichungstag der Anmeldung: 19.12.2001
(73) Patentinhaber: Continental Automotive GmbH, 30165 Hannover (DE)
(72) Erfinder: Reiter, Frank, 65812 Bad Soden (DE)

(56) Entgegenhaltungen:
- DE-A- 19 501 352
- US-A- 5 647 331
- US-A- 5 718 208
- PATENT ABSTRACTS OF JAPAN vol. 014, no. 570 (M-1060), 18. Dezember 1990 (1990-12-18) & JP 02 245463 A (HORIE KINZOKU KOGYO KK), 1. Oktober 1990 (1990-10-01)
- PATENT ABSTRACTS OF JAPAN vol. 014, no. 532 (M-1051), 22. November 1990 (1990-11-22) & JP 02 223666 A (HORIE KINZOKU KOGYO KK), 6. September 1990 (1990-09-06)
- PATENT ABSTRACTS OF JAPAN vol. 2000, no. 06, 22. September 2000 (2000-09-22) & JP 2000 073897 A (CALSONIC CORP), 7. März 2000 (2000-03-07)
- PATENT ABSTRACTS OF JAPAN vol. 014, no. 436 (M-1027), 18. September 1990 (1990-09-18) & JP 02 173352 A (HORIE KINZOKU KOGYO KK), 4. Juli 1990 (1990-07-04)

## Beschreibung

Gegenstand der Erfindung ist ein Kraftstoff-Förder- und Lüftungssystem für den Einsatz in einem Kraftstoffbehälter eines Kraftfahrzeuges.

Es ist bekannt, Kraftstoff aus einem Kraftstoffbehälter mittels einer Pumpe zur Brennkraftmaschine eines Kraftfahrzeuges zu fördern. Um auch bei niedrigem Füllstand im Behälter in allen Situationen, z. B. Kurvenfahrten, Abstellen des Kraftfahrzeuges auf einer geneigten Ebene, in denen sich der Kraftstoff von der Pumpe wegbewegen kann, ein zuverlässiges Fördern zu gewährleisten, wird die Kraftstoffpumpe oftmals in einem Schwalltopf angeordnet. Der Kraftstoff wird hierbei in den Schwalltopf gefördert und die Kraftstoffpumpe saugt den Kraftstoff aus dem Schwalltopf an.

Darüber hinaus sind in heutigen Kraftstoffbehältern weitere Aggregate und Baugruppen angeordnet, die ebenfalls für eine zuverlässige Kraftstoffversorgung unter allen Betriebsbedingungen sorgen. Hierzu zählen insbesondere Leitungen, Ventile, Filter, Druckregler, sowie das Entlüftungssystem. Die Entlüftung eines Kraftstoffbehälters muss sowohl für den Betankungsvorgang als auch während des Betriebs des Fahrzeuges sichergestellt sein. Hierfür wird in der Regel ein Entlüftungssystem verwendet, mit dem die Betriebs- und die Betankungsentlüftung gewährleistet wird. Derartig Entlüftungssysteme, wie z.B. in JP-02 245 463, weisen oftmals mehrere Leitungen auf, die von mehreren Stellen im Behälter zu einem oder mehreren Ausgleichsbehältern führen. Diese Ausgleichsbehälter dienen als Flüssigkeitsfalle für den Kraftstoff und sind sowohl innerhalb als auch außerhalb des Kraftstoffbehälters angeordnet.

Nachteilig bei all diesen Kraftstoff-Fördersystemen ist der hohe Aufwand für die einzelnen Komponenten hinsichtlich ihrer Anordnung, Befestigung und Montage. Da heutige Kraftstoffbehälter eine Vielzahl von Einbauten besitzen, sind viele Montageschritte notwendig, um all diese Einbauten im Behälter zu montieren. Infolgedessen gestaltet sich die Fertigung des Behälters, bzw. der Halbschalen aus denen der Kraftstoffbehälter letztendlich durch Fügen entsteht, relativ kompliziert, da alle Einbauten an der Behälterwandung befestigt werden müssen und somit Verbindungselemente für die Befestigung der Einbauten an die Behälterwandung anzuformen sind. Dies erfordert aufwendige und somit teure Werkzeuge für die Herstellung der einzelnen Halbschalen.

Der Erfindung liegt somit die Aufgabe zugrunde, einen Kraftstoffbehälter zu schaffen, bei dem die Herstellung und die Montage einfacher und mit geringeren Kosten gestaltet werden kann.

Gelöst wird die Aufgabe mit den Merkmalen des Anspruchs 1. Vorteilhafte Ausgestaltungen sind den Unteransprüchen beschrieben.

Die erfindungsgemäße Einrichtung besteht aus einer Fördereinheit, die eine in einem Schwalltopf angeordnete Kraftstoffpumpe aufweist und ein Entlüftungssystem für die Betriebs- und/oder Betankungsentlüftung mit einem im Kraftstoffbehälter angeordneten Ausgleichsbehälter, in den die Entlüftungsleitungen münden und aus dem Kraftstoffbehälter nach außen geführt ist. Der Schwalltopf und der Ausgleichsbehälter sind miteinander verbunden und bilden eine Einheit. Dadurch können sowohl die Fördereinheit als auch der Ausgleichsbehälter, bzw, das Entlüftungssystem vorab montiert und geprüft werden und anschließend als Ganzes im Kraftstoffbehälter angeordnet werden.

Für die Anordnung von Ausgleichsbehälter und Schwalltopf sind die vielfältigsten Ausgestaltungen denkbar. In einer ersten Ausgestaltung kann der Ausgleichsbehälter über dem Schwalltopf angeordnet sein. Insbesondere bei hohen Kraftstoffbehältern ist diese Ausgestaltung besonders vorteilhaft, da der Ausgleichsbehälter mit seinen Entlüftungsleitungen sinnvollerweise im oberen Bereich des Kraftstoffbehälters anzuordnen ist, während der Schwalltopf in unmittelbarer Nähe des Behälterbodens anzubringen ist. Bei flacheren Kraftstoffbehältern ist die Anordnung des Schwalltopfes neben dem Ausgleichsbehälter möglich. Schwalltopf und Ausgleichsbehälter sind in diesem Fall durch eine gemeinsame Wand voneinander getrennt.

In einer vorteilhaften Ausgestaltung sind der Ausgleichsbehälter und der Schwalltopf separate Bauteile, die miteinander verbunden werden. Das Fügen der beiden Bauteile kann formschlüssig als Rast-, Steck- oder Schraubverbindung, stoffschlüssig durch Kleben oder Schweißen oder kraftschlüssig mittels Spannelementen nachfolgen. Hierbei besteht die Möglichkeit im Schwalltopf zuerst alle Komponenten, z. B. Kraftstoffpumpe, Filter, Druckregler Saugstrahlpumpen, Füllstandsgeber zu montieren und anschließend den Schwalltopf mit dem Ausgleichsbehälter zu verbinden. Ebenso kann das Entlüftungssystem mit dem Ausgleichsbehälter vorab montiert werden. Die erfindungsgemäße Vorrichtung kann sowohl in Spritz- als auch Blastanks eingesetzt werden. Hierzu wird die Vorrichtung bei einem Spritztank vor dem Fügen der Tankhalbschalen in einer der Halbschalen montiert. Bei einem Einsatz in einem Blastank wird die fertige Vorrichtung in den Blasformling unmittelbar vor dem Blasformen eingebracht.

Es ist auch denkbar, den Ausgleichsbehälter und den Schwalltopf einstückig herzustellen. Der Vorteil hierbei besteht darin, dass beide Bauteile anschließend nicht mehr miteinander verbunden werden müssen. Das den Ausgleichsbehälter und den Schwalltopf bildende Bauteil kann beispielsweise mittels Spritzgießens hergestellt werden. Bei einer Ausgestaltung dieses Bauteils, in der der Ausgleichsbehälter über dem Schwalltopf angeordnet ist, ist es vorteilhaft zumindest den Bereich des Schwalltopfes offen zu gestalten, um die anschließende Montage der Kraftstoffpumpe und der zugehörigen Komponenten zu ermöglichen. Mit einem als Boden ausgebildeten Deckel kann der Schwalltopf nach erfolgter Montage verschließbar gestaltet werden. Analog dazu kann auch der Ausgleichsbehälter mit einem Deckel verschließbar gestaltet sein.

Als günstig hat sich eine Ausgestaltung erwiesen, bei der die Seitenwände des Schwalltopfes derart flexibel sind, dass der Schwalltopf in seiner Höhe variabel ist. Dadurch ist gewährleistet, dass sich das erfindungsgemäße Kraftstoff-Förder- und Lüftungssystem an die Höhe des Kraftstoffbehälters anpassen kann, da dessen Höhe infolge des Füllstandes variiert. Hierdurch ist sichergestellt, dass der Schwalltopf im Kontakt mit dem Boden des Kraftstoffbehälters steht und somit der Kraftstoff jederzeit am tiefsten Punkt im Kraftstoffbehälter angesaugt wird. Gleichzeitig befinden sich die Entlüftungsleitungen immer im oberen Bereich des Kraftstoffbehälters, sodass eine zuverlässige Entlüftung sichergestellt ist. Das Kraftstoff-Förder- und Lüftungssystem kann dabei sowohl an der oberen oder unteren Begrenzungswand des Kraftstoffbehälters fixiert sein.

Weiterhin muss gewährleistet sein, dass der sich im Ausgleichsbehälter ansammelnde flüssige Kraftstoff abgeführt wird, um ein Fluten des Ausgleichsbehälters zu vermeiden. Der Ausgleichsbehälter kann hierzu mit einem Ventil, insbesondere mit einem Rückschlagventil, ausgestattet sein. Diese Lösung ist von Vorteil, wenn der abzuführende Kraftstoff in den Schwalltopf geleitet wird und dieser geschlossen ausgeführt ist. Das Rückschlagventil öffnet nur dann, wenn der hydrostatische Druck im Schwalltopf geringer als der Druck im Ausgleichsbehälter ist. Gleichzeitig wird somit ein Fluten des Ausgleichsbehälters verhindert. Als günstig hat sich die Anordnung einer aktiven Absaugung mittels einer Pumpe erwiesen. Diese kann eine vom Vorlauf oder der Abregelmenge eines Druckreglers betriebene Saugstrahlpumpe, eine Hilfspumpe oder auch die Kraftstoffpumpe bzw. eine weitere Stufe in der Kraftstoffpumpe sein. Der abgeführte Kraftstoff wird in den Kraftstoffbehälter geleitet. Hierbei kann auf lange Leitungen verzichtet werden.

An einigen Ausführungsbeispielen wird die Erfindung näher erläutert. Dabei zeigen:
- Fig. 1:: eine schematische Darstellung des erfindungsgemäßen Kraftstoff-Förder- und Lüftungssystems in einem Kraftstoffbehälter,
- Fig. 2 - 4:: weitere Ausgestaltungen des Kraftstoff-Förder- und Lüftungs systems.

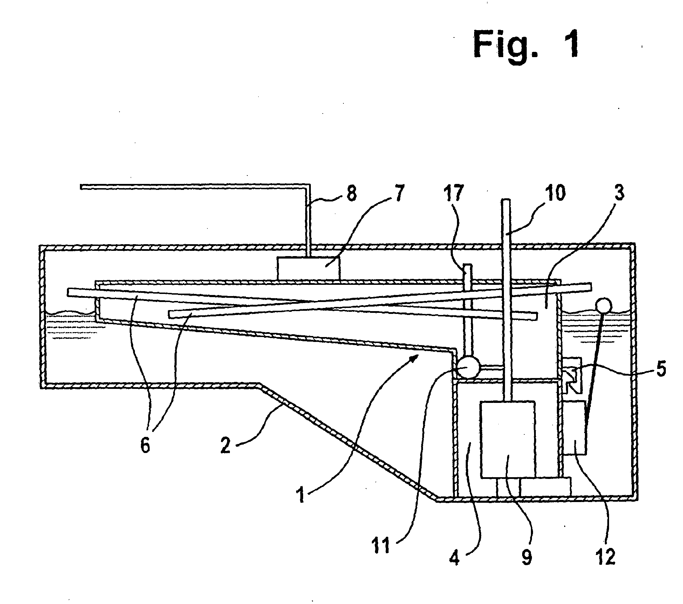

Das in Figur 1 dargestellte Kraftstoff-Förder- und Lüftungssystem 1 ist in einem Kraftstoffbehälter 2 angeordnet. Das Kraftstoff-Förder- und Lüftungssystem 1 besteht aus einem Ausgleichsbehälter 3 und einem Schwalltopf 4, die mittels Rastelementen 5 verbunden sind. In dem Ausgleichsbehälter 3 sind Leitungen 6 für die Betriebs- und Betankungsentlüftungen angeordnet. Weiterhin besitzt der Ausgleichsbehälter 3 ein Ventil 7 von dem eine Leitung 8 zu einem nicht dargestellten Filter führt. Im Schwalltopf 4 ist eine Kraftstoffpumpe 9 angeordnet, die Kraftstoff aus dem Kraftstoffbehälter 2 ansaugt und über eine Vorlaufleitung 10, Druckregler und Filter zur Brennkraftmaschine des Kraftfahrzeuges fördert. Ein Geber 12 ist am Schwalltopf 4 befestigt und dient zur Ermittlung des Füllstandes im Kraftstoffbehälter. Eine über die Vorlaufleitung 10 betriebene Saugstrahlpumpe 11 saugt den sich im Ausgleichsbehälter ansammelnden flüssigen Kraftstoff ab und leitet mittels einer Leitung 17 in den Kraftstoffbehälter 2.

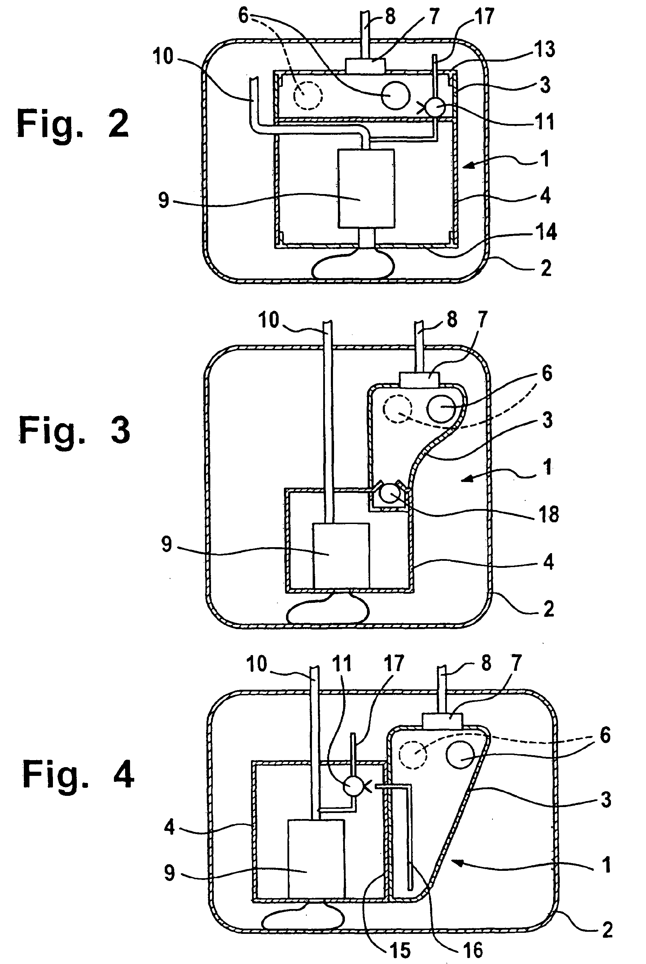

Das in Figur 2 dargestellte Kraftstoff-Förder- und Lüftungssystem 1 zeigt einen Ausgleichsbehälter 3, der über dem Schwalltopf 4 angeordnet ist. Sowohl der Ausgleichsbehälter 3 als auch der Schwalltopf 4 sind jeweils mit einem Deckel 13, 14 verschließbar. Die Vorlaufleitung 10 ist seitlich aus dem Schwalltopf 4 herausgeführt.

In Figur 3 ist der Ausgleichsbehälter 3 seitlich über dem Schwalltopf 4 angeordnet. Über ein Rückschlagventil 18 stehen beide Behälter fluidisch miteinander in Verbindung. Dadurch wird gewährleistet, dass einerseits der sich im Ausgleichsbehälter 3 ansammelnde flüssige Kraftstoff in den Schwalltopf 4 gelangt und andererseits wird ein Eindringen von Kraftstoff in den Ausgleichsbehälter 3 über den Schwalltopf 4 vermieden.

Figur 4 zeigt schließlich die Anordnung des Ausgleichsbehälters 3 neben dem Schwalltopf 4. Beide Behälter 3, 4 sind durch eine gemeinsame Wand 15 miteinander verbunden. Im Schwalltopf 4 ist einer von der Vorlaufleitung 10 gespeiste Saugstrahlpumpe 11 angeordnet. Eine mit der Saugstrahlpumpe 11 verbundene Saugleitung 16 verbindet den Ausgleichsbehälter 3 mit der Saugstrahlpumpe 11, über die der Kraftstoff aus dem Ausgleichsbehälter 3 mittels der Leitung 17 in den Kraftstoffbehälter geleitet wird.

## Patentansprüche

1. Kraftstoff-Fördersystem für einen Kraftstoffbehälter (2) in einem Kraftfahrzeug, bestehend aus einer Fördereinheit, die einen Schwalltopf (4) und eine in diesem angeordnete Kraftstoffpumpe (9) aufweist und einem Entlüftungssystem für die Betankungs- und/oder Betriebsentlüftung mit einem Ausgleichsbehälte (3) in den mindestens eine Entlüftungsleitung mündet, wobei der Schwalltopf (4) und der Ausgleichbehälter (3) miteinander verbunden sind
**dadurch gekennzeichnet, dass** die Enflüftungsleitung vom Ausgleichbehälter (3) aus dem Kraftstoffbehälter (2) nach aussen geführt ist.

2. Kraftstoff-Fördersystem nach Anspruch 1, **dadurch gekennzeichnet, dass** der Schwalltopf (4) und der Ausgleichsbehälter (3) separate Bauteile sind, die mittels Kraftschluss, vorzugsweise mit Spannelementen, mittels Formschluss vorzugsweise mit Rast- und Steckverbindungen oder mittels Stoffschluss, vorzugsweise durch Kleben oder Schweißen, miteinander verbunden sind.

3. Kraftstoff-Fördersystem nach Anspruch 1, **dadurch gekennzeichnet, dass** der Schwalltopf (4) und der Ausgleichsbehälter (3) einstückig, vorzugsweise mittels Spritzgießens als Baueinheit ausgebildet sind.

4. Kraftstoff-Fördersystem nach zumindest einem der Ansprüche 1 bis 3, **dadurch gekennzeichnet, dass** der Schwalltopf (4) und der Ausgleichsbehälter (3) jeweils mit einem Deckel verschließbar sind.

5. Kraftstoff-Fördersystem nach zumindest einem der Ansprüche 1 bis 4, **dadurch gekennzeichnet, dass** der Schwalltopf (4) und der Ausgleichsbehälter (3) über ein Ventil, vorzugsweise ein Rückschlagventil, oder eine Pumpe, insbesondere eine Saugstrahlpumpe (11) verbunden sind.

## Claims

1. Fuel delivery system for a fuel tank (2) in a motor vehicle, comprising a delivery unit, which has a surge chamber (4) and a fuel pump (9) arranged in the latter, and a ventilation system for ventilation during refuelling and/or operation with a compensating container (3) into which at least one ventilation line opens, the surge chamber (4) and the compensating container (3) being connected to each other, **characterized in that** the ventilation line is guided to the outside by the compensating container (3) from the fuel tank (2).

2. Fuel delivery system according to Claim 1, **characterized in that** the surge chamber (4) and the compensating container (3) are separate components which are connected to each other by means of a frictional connection, preferably with clamping elements, by means of a positive-locking connection, preferably with latching and plug-in connections, or by means of a material connection, preferably by bonding or welding.

3. Fuel delivery system according to Claim 1, **characterized in that** the surge chamber (4) and the compensating container (3) are formed integrally as a constructional unit, preferably by means of injection moulding.

4. Fuel delivery system according to at least one of Claims 1 to 3, **characterized in that** the surge chamber (4) and the compensating container (3) can each be closed with a lid.

5. Fuel delivery system according to at least one of Claims 1 to 4, **characterized in that** the surge chamber (4) and the compensating container (3) are connected via a valve, preferably a nonreturn valve, or via a pump, preferably a suction jet pump (11).

## Revendications

1. Système d'alimentation en carburant pour réservoir à carburant (2) dans un véhicule automobile, composé d'une unité de refoulement, qui comporte un pot de compensation (4) et une pompe à carburant (9) placée dans le pot de compensation, et d'un système d'aération, assurant l'aération pendant le remplissage et/ou le fonctionnement et comportant un réservoir de compensation (3) dans lequel débouche au moins une conduite d'aération, le pot de compensation (4) et le réservoir de compensation (3) étant reliés l'un à l'autre, **caractérisé par le fait que** la conduite d'aération du réservoir de compensation (3) conduit du réservoir à carburant (2) vers l'extérieur.

2. Système d'alimentation en carburant selon la revendication 1, **caractérisé par le fait que** le pot de compensation (4) et le réservoir de compensation (3) sont des pièces distinctes assemblées l'une à l'autre par assemblage forcé, d'une façon préférentielle avec des organes de serrage, par assemblage géométrique, d'une façon préférentielle avec des liens encliquetés et enfichés ou par assemblage de matière, d'une façon préférentielle par collage ou soudage.

3. Système d'alimentation en carburant selon la revendication 1, **caractérisé par le fait que** le pot de compensation (4) et le réservoir de compensation (3) sont conçus en une seule pièce, d'une façon préférentielle au moyen d'un moulage par injection pour former une unité constructive unique.

4. Système d'alimentation en carburant selon au moins l'une des revendications 1 à 3, **caractérisé par le fait que** le pot de compensation (4) et le réservoir de compensation (3) peuvent être fermés chacun par un couvercle.

5. Système d'alimentation en carburant selon au moins l'une des revendications 1 à 4, **caractérisé par le fait que** le pot de compensation (4) et le réservoir de compensation (3) sont reliés l'un à l'autre par l'intermédiaire d'une soupape, d'une façon préférentielle, une soupape de non-retour, ou d'une pompe, notamment une pompe à jet aspirant (11).
